# EUROPÄISCHE PATENTSCHRIFT

(11) **EP 0 779 166 B1**
(45) Veröffentlichungstag und Bekanntmachung des Hinweises auf die Patenterteilung: **08.08.2001**
(21) Anmeldenummer: 96118353.0
(22) Anmeldetag: 15.11.1996
(51) Int. Cl.: B60G 17/052, B60G 17/015

(54) **Niveauregeleinrichtung**
Level control device
Dispositif de réglage du niveau

(30) Priorität: 14.12.1995 DE 19546730
(43) Veröffentlichungstag der Anmeldung: 18.06.1997
(73) Patentinhaber: WABCO GmbH & Co. OHG, 30453 Hannover (DE)
(72) Erfinder: Lentz, Uwe, 31535 Neustadt (DE); Lucas, Johann, 31319 Sehnde (DE); Meier, Jörg, 31840 Hess. Oldendorf (DE); Gocz, Reinhard, 30926 Seelze (DE)
(74) Vertreter: Schrödter, Manfred, Dipl.-Ing.

(56) Entgegenhaltungen:
- EP-A- 0 170 794
- EP-A- 0 372 218
- DE-A- 3 815 612
- DE-A- 3 815 614
- DE-A- 4 001 485
- DE-A- 4 003 188
- DE-A- 4 323 544
- US-A- 5 180 024

## Beschreibung

Die Erfindung betrifft eine mit Druckmittel arbeitende Niveauregeleinrichtung für Fahrzeuge, gemäß dem Oberbegriff des Patentanspruchs 1. Eine derartige Niveauregeleinrichtung ist aus der EP-A-0 372 278 bekannt.

Eine ähnliche Niveauregeleinrichtung ist aus der Veröffentlichung VDI-Berichte Nr. 774, 1989, "Elektronisch gesteuerte Luftfederung und Dämpferregelung" von Dr. K.-H. Schönfeld, VDI, und H. Geiger, Hannover, bekannt.

In der vorerwähnten Veröffentlichung ist beschrieben, daß alle Höhenänderungen (Regelvorgänge) innerhalb vorwählbarer Toleranzgrenzen achsparallel oder straßenparallel verlaufen und daß somit auch bei asymmetrischer Last eine Fahrt mit beliebigem Niveau mit annähernd waagerechtem Aufbau möglich ist.

Um für eine mit einer asymmetrischen Last beaufschlagten geregelten Luftfederungs-Achse einen annähernd waagerechten Aufbau zu ermöglichen, werden in die beiden Luftfederbälge "links" und "rechts" unterschiedliche Drücke eingespeist. Die Drücke in den beiden Luftfederbälgen gleichen die asymmetrische Beladung aus: Derjenige Luftfederbalg, auf den die größere Kraft-Komponente einwirkt, weist einen höheren Druck als derjenige Luftfederbalg auf, auf den die geringere Kraftkomponente einwirkt. Eine asymmetrische Last bezüglich einer Achse hat also zur Folge, daß sich in den Luftfederbälgen dieser Achse ebenfalls asymmetrische Druckniveaus einstellen.

Bei der vorerwähnten Veröffentlichung kann es jedoch bei stark asymmetrischer Last zu einer automatischen Fehler-Abschaltung kommen. Derartige extreme Schiefstellungen entstehen z. B. durch Einwirkung eines stark einseitig beladenen Aufliegers. Die Fehler-Abschaltung erfolgt, wenn die Regelelektronik versucht, einen waagerechten Aufbau herbeizuführen; der Druck im Luftfederbalg mit der hohen Kraftkomponente wird zunehmend erhöht, bis in diesem Balg der Vorratsdruck herrscht; der Druck im Balg mit der niedrigen Kraftkomponente wird sukzessive verringert, bis der Balg vollständig entlüftet ist. Ein entlüfteter Balg kann keine Federwirkung mehr entfalten; ein solcher Zustand stellt einen gravierenden Fehler dar, der zu der erwähnten Fehler-Abschaltung des Systems führt.

Eine Fehler-Abschaltung ist unerwünscht, da sie während des normalen Betriebs, das heißt im Verlaufe von Be- und Entladungsvorgängen, auftritt. Ist nämlich eine Fehler-Abschaltung einmal eingetreten, so muß zunächst die asymmetrische Last beseitigt werden, bevor eine Wiederinbetriebnahme des Systems möglich ist; insgesamt stellt dies ein umständliches und zeitraubendes Verfahren dar.

Aus der EP-A1-0 372 218 ist eine Niveauregelung für luftgefederte Fahrzeuge bekannt, bei der eine Steuereinrichtung [dort (15)] besondere Maßnahmen für den Fall vornimmt, in dem bei der separaten Niveauregelung der rechten und der linken Fahrzeugseite während einer Niveauabsenkung das Niveau einer Fahrzeugseite noch oberhalb des Sollwertes ist, obwohl der Druck in dem entsprechenden Luftfederelement bereits auf einen zulässigen Mindestdruck abgesunken ist; dieser Fall tritt hauptsächlich bei einer Verspannung des Fahrzeugrahmens, insbesondere bei unbeladenem Fahrzeug auf. Die besonderen Maßnahmen bestehen darin, daß ein Niveaumittelwertregelungs-Vorgang durchgeführt wird. Unter Verwendung von Ventilen [dort (25, 26, 27)], Weg-Sensoren [dort (5, 6)] und Druck-Sensoren [dort (9, 10)] sorgt die Steuereinrichtung dafür, daß auf der Seite entlüftet wird, auf der das Niveau bereits innerhalb eines Toleranzbandes liegt, um das mittlere Fahrzeugniveau auf einen zulässigen Wert zu bekommen.

Die EP-A1-0 385 612 schlägt bei der separaten Druck-und Niveauregelung der rechten und der linken Fahrzeugseite von luftgefederten Fahrzeugen, bei der nach Ende der Regelung der Druck in dem linken Luftfederelement erheblich von dem Druck in dem rechten Luftfederelement abweicht, vor, die Druckdifferenz zwischen diesen Luftfederelementen abzusenken. Eine Steuereinrichtung sorgt für diese Absenkung, indem sie eine zusätzliche Druckausgleichsregelung zwischen den Luftfederelementen vornimmt. In einer bestimmten Reihenfolge, die davon abhängt, ob die Längen der beiden Luftfederelemente größer oder kleiner als die Soll-Längen sind, werden die Drücke in den Luftfederelementen, gegebenenfalls in mehreren Durchläufen, schrittweise mit dem Ziel erhöht bzw. abgesenkt, daß sich beide Drücke dem Druck-Mittelwert zwischen den ursprünglichen Drücken in beiden Luftfederelementen annähern.

Sowohl bei dem Niveaumittelwertregelungs-Vorgang entsprechend der EP-A1-0 372 218 [dort Druck-Meßeinrichtungen (9, 10)] als auch bei der Druckausgleichsregelung entsprechend der EP-A1-0 385 612 [dort DruckMeßeinrichtungen (9, 10)] werden Druckmeßeinrichtungen zur Durchführung der dort offenbarten Verfahren benutzt.

Der Erfindung liegt deshalb die Aufgabe zugrunde, ohne Verwendung einer Druckmeßeinrichtung Maßnahmen für eine mit Druckmittel arbeitende Niveauregeleinrichtung der eingangs genannten Art vorzusehen, damit im Betrieb keine zu großen Druckunterschiede zwischen den Luftfederbälgen einer geregelten Achse entstehen.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die Begrenzung der Balgdruck-Unterschiede das Fahrverhalten des Fahrzeugs verbessert wird. U. a. wirkt sich das verbesserte Fahrverhalten auch durch ein verbessertes Bremsverhalten aus.

Durch ein jederzeit ausreichendes Druckniveau in den Luftfederbälgen besteht der Vorteil, daß es nicht zu einer Schädigung eines Luftfederbalges kommen kann.

Die Erfindung wird im folgenden anhand eines Ausführungsbeispiels, das in den Zeichnungen dargestellt ist, näher erläutert.

Dabei zeigen:
- Fig. 1: die Komponenten der Niveauregeleinrichtung für eine Achse,
- Fig. 2a: das Sollwert-Toleranzband für eine Achse,
- Fig. 2b: das temporäre Ersatz-Toleranzband, das gegebenenfalls bei einer Fahrzeug-Schiefstellung eingenommen wird,
- Fig. 3: das Struktogramm desjenigen Teils des Regelprogramms, welches die Vorgänge bei einer Fahrzeug-Schiefstellung steuert.

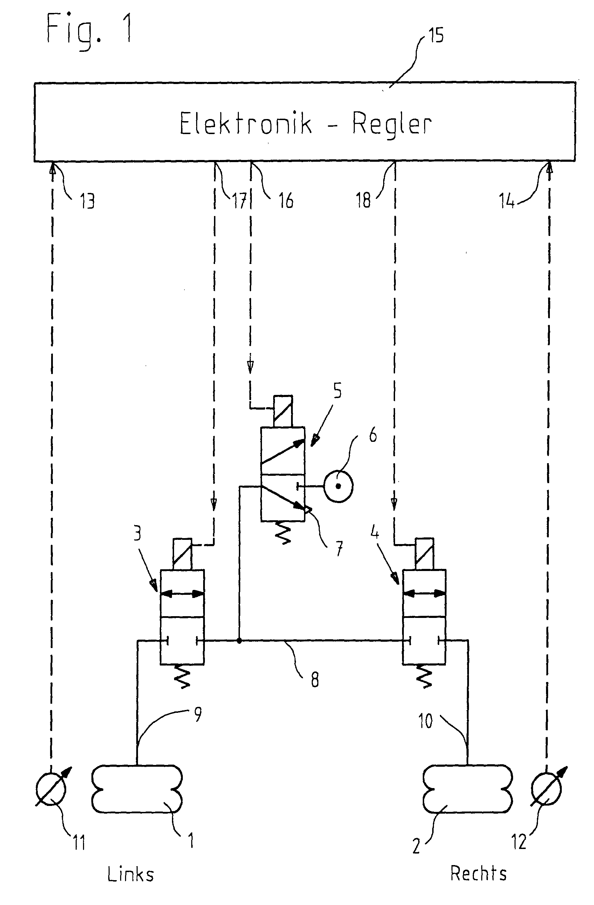

In Fig. 1 gibt es zwischen den Komponenten pneumatische und elektrische Verbindungen: Pneumatische Verbindungen werden als durchgehende Linie dargestellt, während elektrische Verbindungen als gestrichelte Linie dargestellt werden.

Der Fahrzeugaufbau (gefederter Teil des Fahrzeugs) ist gegenüber den Fahrzeugachsen (ungefederter Teil des Fahrzeugs) durch Luftfederbälge abgestützt. Bezüglich einer Achse sind dies ein Luftfederbalg (1) an der linken und ein Luftfederbalg (2) an der rechten Seite der Achse. Da die Luftmenge in den Luftfederbälgen die Höhe des Fahrzeugaufbaus über der Fahrzeugachse bestimmt, kann diese Höhe durch Veränderung der Luftmenge in den Luftfederbälgen verändert werden. Druck, Volumen und Temperatur eines Gases stehen aufgrund der Gasgesetze zueinander in Zusammenhang, und so führt bei gleichem Volumen eines Luftfederbalges (konstantes Niveau) eine Veränderung der Luftmenge in diesem Luftfederbalg ebenfalls zu einer Veränderung des Drucks im Luftfederbalg. Jedem Luftfederbalg ist daher ein Belüftungs-/Entlüftungs-Ventil zugeordnet. Konstruktiv ist ein Belüftungs-/Entlüftungs-Ventil als 2/2-Wege-Magnetventil ausgeführt mit einer Abschlußstellung, in der die Luftmenge des Luftfederbalges nicht verändert wird und einer Durchlaßstellung, in der eine Veränderung der Luftmenge des Luftfederbalges erfolgt. Dem Luftfederbalg (1) ist das Belüftungs-/Entlüftungs-Ventil (3) und dem Luftfederbalg (2) das Belüftungs-/Entlüftungs-Ventil (4) zugeordnet.

Zur kontinuierlichen Erfassung der Höhen, nämlich der Abstände des Fahrzeugaufbaus gegenüber der Fahrzeugachse, sind Höhensensoren vorgesehen. Diese Höhensensoren ermitteln die genannten Abstände an den Positionen der Luftfederbälge und geben diese Werte in Form elektrischer Signale an einen Elektronik-Regler (15) weiter. Zur Höhenbestimmung des Fahrzeugaufbaus sind bezüglich einer Achse zwei Höhensensoren vorgesehen, und zwar Höhensensor (11) für Luftfederbalg (1) und Höhensensor (12) für Luftfederbalg (2).

Zur kostengünstigen Realisierung der Niveauregeleinrichtung werden die Höhenregelungen an den einzelnen Achs-Positionen im Zeitmultiplexverfahren, d. h. zeitlich hintereinander, abgewickelt. Dadurch können Komponenten für alle Regelpositionen gemeinsam vorgesehen werden. So ist für die Regelposition "links" und "rechts" ein als 3/2-Wege-Magnetventil ausgebildetes gemeinsames Richtungsventil (5) vorgesehen, welches festlegt, ob der Luftfederbalg der Regelposition, welche gerade bearbeitet wird, über einen Luftvorrat (6) belüftet oder ob dieser Luftfederbalg über eine Entlüftung (7) zur Atmosphäre entlüftet werden soll. Je nachdem, ob be- oder entlüftet wird, nimmt das Ventil (5) die Belüftungs- oder Entlüftungsstellung ein. Bei nicht erregtem Magneten wird die Entlüftungsstellung eingenommen.

Zur Regelung der Luftmenge in den Luftfederbälgen (1, 2) ist der Elektronik-Regler (15) vorgesehen, der über zwei Eingänge (13, 14) und drei Ausgänge (16, 17, 18) verfügt. Der erste Eingang (13) ist mit dem Höhensensor (11), und der zweite Eingang (14) ist mit dem Höhensensor (12) verbunden; der erste Ausgang (16) steuert das gemeinsame Richtungsventil (5), der zweite Ausgang (17) steuert das Belüftungs-/Entlüftungs-Ventil (3), und der dritte Ausgang (18) steuert das Belüftungs-/Entlüftungs-Ventil (4) an.

Der Ausgang des gemeinsamen Richtungsventils (5) ist mit einer Leitung (8) verbunden, welche zu den Belüftungs/Entlüftungs-Ventilen (3, 4) führt, welche die Funktion von Stellventilen für die Luftfederbälge (1, 2) erfüllen; hierbei sind das Stellventil (3) über eine Leitung (9) mit dem Luftfederbalg (1) und das Stellventil (4) über eine Leitung (10) mit dem Luftfederbalg (2) verbunden. Bei den Stellventilen (3, 4) liegt bei nicht erregtem Magnet die Abschlußstellung vor; in dieser Schaltstellung bleibt die Luftmenge in dem Luftfederbalg, der mit dem jeweiligen Stellventil verbunden ist, unverändert. Bei erregtem Magnet eines Stellventils schaltet dieses in Durchlaßstellung um; in dieser Stellung wird die Luftmenge in dem Luftfederbalg, welcher mit dem Stellventil verbunden ist, verändert, wobei, wie vorstehend beschrieben, die Art der Veränderung (Be- bzw. Entlüften) von der gewählten Stellung des gemeinsamen Richtungsventils (5) abhängt.

Zur Niveauregelung einer Achse werden unter Verwendung der zwei Höhensensoren (11, 12) zwei gesonderte Regelkreise mit jeweils einer eigenen Kombination von Höhensensor, Luftfederbalg und Stellventil gebildet. Bezüglich des Luftfederbalges an der Achse "links" ist dies die Kombination der Elemente mit den Bezugszeichen (11), (1) und (3), bezüglich des Luftfederbalges an der Achse "rechts" ist es diejenige mit den Bezugszeichen (12), (2) und (4).

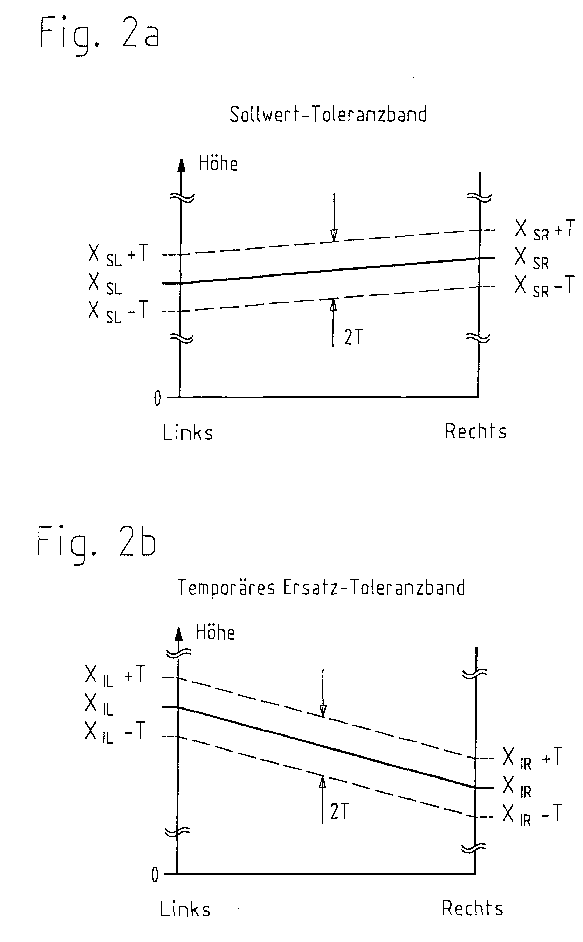

Die Niveauregelung der Luftfederbälge (1, 2) nach Fig. 1 erfolgt entsprechend dem in Fig. 2a angegebenen Sollwert-Toleranzband.

In der Regelelektronik ist in geeigneter, nicht dargestellter Weise für den linken Luftfederbalg ein Sollwert X_{SL} und für den rechten Luftfederbalg ein Sollwert X_{SR} eingespeichert. Es besteht z. B., wie eingangs erwähnt, die Möglichkeit, diese Sollwerte über eine handbetätigte Fernsteuerung vorzugeben. Die linken und rechten Sollwerte X_{SL} und X_{SR} können, wie auch in Fig. 2a schematisch dargestellt, auf unterschiedliche Höhen eingestellt sein.

Um diese Höhen-Sollwerte X_{SL} und X_{SR} wird ein Toleranzband gebildet, das sich von dem jeweiligen Sollwert um T zu höheren und zu niederen Werten erstreckt; das Toleranzband hat damit eine Breite von 2T.

Wie erläutert, steht am ersten Eingang (13) des Elektronik-Reglers (15) der Meßwert des dem Luftfederbalg (1) zugeordneten Höhensensors (11) an. Dieser Meßwert stellt den Istwert X_{IL} für den linken Luftfederbalg dar. In sinngemäß gleicher Weise steht am zweiten Eingang (14) des Elektronik-Reglers (15) der Istwert X_{IR} für den rechten Luftfederbalg (2) an.

Bei einem Beladungswechsel ändert sich das Gewicht des Fahrzeugaufbaus, und damit ändern sich auch - aufgrund ihrer Federcharakteristik - die Höhen der Luftfederbälge einer Achse: Es verändern sich die Höhen-Istwerte X_{IL} und X_{IR}.

Wird die Beladung z. B. vergrößert, so stellen sich kleinere Werte X_{IL} und X_{IR} ein. Überschreitet diese Beladungsvergrößerung eine gewisse Grenze, so stellt sich ein neuer Höhen-Istwert "links" X_{IL} ein, der außerhalb des Sollwert-Toleranzbandes liegt, d. h. kleiner ist als der Wert (X_{SL}-T), und als Höhen-Istwert "rechts" stellt sich ein Istwert X_{IR} ein, der kleiner ist als (X_{SR}-T).

Als Folge dieser Unterschreitung des Sollwert-Toleranzbandes durch die Höhen-Istwerte wird die Niveauregelung aktiviert. Die Luftmenge in den Luftfederbälgen (1, 2) nach Fig. 1 wird solange erhöht, bis sich an den HöhenSensoren (11, 12) nach Fig. 1 Höhen-Istwerte X_{IL} und X_{IR} einstellen, die innerhalb des in Fig. 2a erläuterten Sollwert-Toleranzbandes liegen. Im erwähnten zeitlichen Hintereinander (Zeitmultiplexverfahren) werden über die zwei erwähnten Regelkreise mit ihrer Kombination der Elemente (11, 1, 3) und (12, 2, 4) die beiden Luftfederbälge (1, 2) nach Fig. 1 belüftet, wobei das gemeinsame Richtungsventil (5) in die Belüftungsstellung geschaltet ist.

Wird die Beladung eines Fahrzeugs reduziert, so dehnen sich die Luftfederbälge einer Achse aus, und die Höhen-Istwerte X_{IL} und X_{IR} der Höhensensoren (11, 12) nach Fig. 1 werden vergrößert. Wird dabei das Sollwert-Toleranzband nach Fig. 2a überschritten [ X_{IL} > (X_{SL}+T), X_{IR} > (X_{SR}+T)], so werden über die beschriebenen Regelkreise die Luftfederbälge (1, 2) entlüftet, bis die Höhen-Istwerte X_{IL} und X_{IR} wieder in das Sollwert-Toleranzband nach Fig. 2a fallen. Diese Entlüftung erfolgt in sinngemäß gleicher Weise wie die oben beschriebene Belüftung, wobei das gemeinsame Richtungsventil (5) nach Fig. 1 in die Entlüftungsstellung geschaltet ist.

Mit den vorstehenden Erläuterungen ist beschrieben, auf welche Weise eine Niveauregelung bei "symmetrischen" Beladungsveränderungen stattfindet: Eine Beladungsänderung, die z. B. zu einer Unterschreitung des Sollwert-Toleranzbandes auf der linken Seite der Achse führt, erzeugt gleichzeitig auch eine Unterschreitung des Sollwert-Toleranzbandes auf der rechten Seite der Achse.

Bei einer Veränderung der Beladung nur auf einer Seite der Achse findet die Unterschreitung bzw. Überschreitung des Sollwert-Toleranzbandes nur auf derjenigen Seite der Achse statt, auf der auch die Beladungsveränderung gegeben ist. Diese asymmetrische Beladungsveränderung hat zunächst zur Folge, daß sich an der Fahrzeugachse eine Schiefstellung einstellt.

Bei nicht zu großen Schiefstellungen, d. h. in Fällen, bei denen eine Fahrzeugachsen-Schiefstellung eine gewisse Grenze nicht überschreitet, kann die Regelabweichung unter sinngemäßer Verwendung des oben für den Fall des symmetrischen Beladungswechsels beschriebenen Regelalgorithmus wie folgt ausgeregelt werden:
Bei einer Unterschreitung des Sollwert-Toleranzbandes wird der Luftfederbalg auf der Seite der Unterschreitung belüftet, bis der Höhen-Istwert wieder in das Sollwert-Toleranzband zurückkehrt; umgekehrt erfolgt bei einer Überschreitung in sinngemäß gleicher Weise eine Entlüftung.

Während bei Fahrzeugachsen-Schiefstellungen unterhalb der gewissen Grenze die Niveauregeleinrichtung eine Geradestellung des Fahrzeugs bewirkt, kann bei Überschreitung dieser Grenze (vgl. die eingangs erwähnte extreme Schiefstellung) die Fahrzeugachse bei einem größenmäßig hinreichend begrenzten Druckunterschied zwischen den Luftfederbälgen nicht mehr geradegestellt werden. Es wird bei einer Fahrzeug-Schiefstellung geprüft, ob eine Geradestellung bei einem vorgegebenen maximalen Druckunterschied möglich ist, wobei die Prüfung darin besteht, daß eine nach oben begrenzte Anzahl von Versuchen durchgeführt wird, das Fahrzeug geradezustellen. In Abhängigkeit von dem Ergebnis dieser Prüfung wird das Fahrzeug entweder geradegestellt, oder es wird die vorliegende Fahrzeugachsen-Schiefstellung eingelesen und temporär quasi zur "Ersatz-Geradestellung" erklärt.

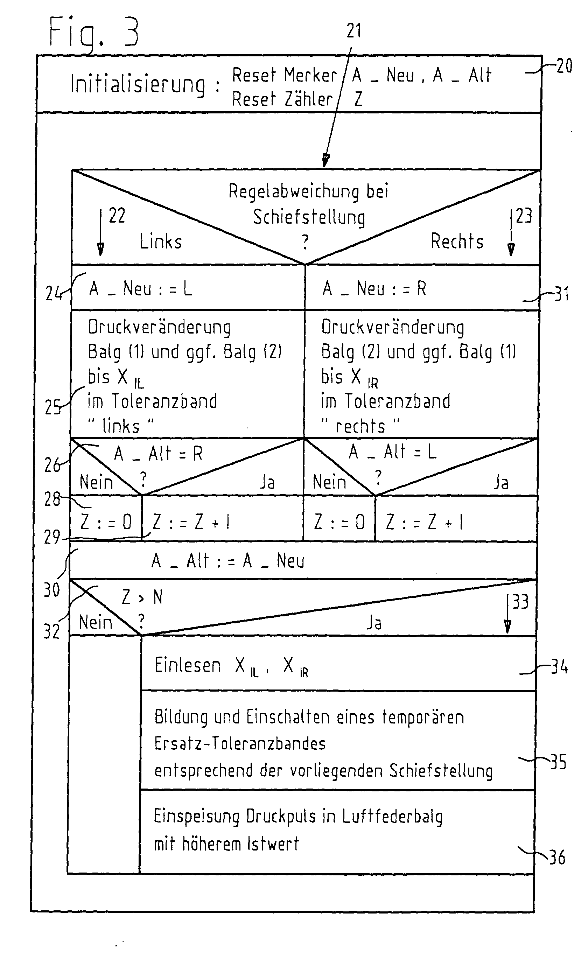

Zu dieser logisch-algorithmischen Verarbeitung von Fahrzeugachsen-Schiefstellungen ist erfindungsgemäß innerhalb des gesamten Regelungsprogrammes für die Niveauregeleinrichtung ein bestimmter Programmteil vorgesehen, dessen Struktogramm in Fig. 3 dargestellt ist. Der Übersichtlichkeit halber enthält Fig. 3 keine Programmelemente, die die erläuterte Regelung bei symmetrischer Beladungsänderung betreffen. Das Struktogramm nach Fig. 3 ist in Anlehnung an die DIN 66261 (Informationsverarbeitung: Sinnbilder für Struktogramme nach Nassi-Shneiderman) ausgeführt.

Der Programmteil nach Fig. 3 arbeitet mit den folgenden Merkern, die als Programmvariable zu verstehen sind und welche die aufgeführten Zustände einnehmen können:
- A_NEU: Neue Abweichung im Falle einer Fahrzeugachsen-Schiefstellung, der Merker wird mit der Kennung "L" versehen, wenn die jetzt vorliegende Abweichung aus dem Sollwert-Toleranzband auf der linken Seite gegeben ist, und er wird mit der Kennung "R" versehen, wenn das Sollwert-Toleranzband auf der rechten Seite überschritten wird; durch RESET wird der Merker auf 0 gesetzt;
- A_ALT: Alte Abweichung bei Schiefstellung, in diesem Merker wird gespeichert, auf welcher Seite die Sollwert-Toleranzabweichung bei der vorhergegangenen Schiefstellung stattgefunden hat; mögliche Einträge sind L, R, 0.

Im Programm werden weiterhin ein Zähler Z verwendet, welcher die Anzahl von entgegengesetzten Regelspielen zählt und eine Konstante N, die angibt, nach wievielen entgegengesetzten Regelspielen von dem eingespeicherten Sollwert-Toleranzband auf ein davon abweichendes temporäres Ersatz-Toleranzband umgeschaltet wird.

In Fig. 3 stellt Block (20) die Initialisierung der Merker und des Zählers dar; sowohl die Merker als auch die Zähler werden auf 0 gesetzt.

Der zu wiederholende Block (21) wird danach jedesmal je einmal durchlaufen, wenn eine Abweichung aus dem Sollwert-Toleranzband nach Fig. 2a bei, wie erläutert, gleichzeitiger Schiefstellung eines Fahrzeugs gegeben ist. Beim Eintritt in Block (21) wird entschieden, welche von zwei alternativen Verarbeitungen durchgeführt werden; hierzu wird geprüft, auf welcher Seite die jetzt vorliegende Schiefstellung vorhanden ist; ist die Abweichung auf der linken Seite, so wird der Block (22), ist die Abweichung auf der rechten Seite, so wird der Block (23) durchlaufen.

Für die weiteren Betrachtungen wird hier angenommen, daß eine Abweichung auf der linken Seite vorliegt, wodurch Block (22) durchlaufen wird. Im ersten Unterblock (24) des Blocks (22) wird dem Merker A_NEU der Wert "L" zugewiesen, da die Schiefstellung auf der linken Seite gegeben ist. Im zweiten Unterblock (25) des Blocks (22) findet über die beschriebene Ventil-Stelleinrichtung eine Druckveränderung von Luftfederbalg (1) und möglicherweise auch Luftfederbalg (2) nach Fig. 1 statt. Die Vorgänge der Druckveränderung hängen davon ab, ob auf der linken Seite der Istwert X_{IL} das Sollwert-Toleranzband nach Fig. 2a unterschreitet oder überschreitet.

Unterschreitet der Höhen-Istwert "links" X_{IL} das Sollwert-Toleranzband, so muß der Fahrzeug-Aufbau über dem linken Luftfederbalg (1) nach Fig. 1 angehoben werden. In diesem Falle wird der Luftfederbalg (1) über die beschriebene Ventil-Stelleinrichtung solange belüftet, bis der Höhen-Istwert X_{IL} in das Sollwert-Toleranzband fällt. Überschreitet dagegen der Höhen-Istwert "links" X_{IL} das Sollwert-Toleranzband, so muß der Fahrzeugaufbau über dem linken Luftfederbalg (1) abgesenkt werden. Beim Senken wird zunächst der linke Luftfederbalg (1) über die beschriebene Ventilstelleinrichtung für eine festgelegte Zeit entlüftet. Sollte nach Ablauf dieser Zeit der Höhen-Istwert X_{IL} noch nicht im Toleranzband eingetroffen sein, so werden im weiteren die Luftfederbälge links und rechts (1, 2) entlüftet, bis der Höhen-Istwert X_{IL} in das Sollwert-Toleranzband fällt.

Nach Abschluß der beschriebenen Stellmaßnahmen zu dem Unterblock (25) nach Fig. 3 an den Ventilen ist sichergestellt, daß der Höhen-Istwert X_{IL} innerhalb des Sollwert-Toleranzfeldes nach Fig. 2a liegt.

An den ersten Unterblock (25) von Block (22) nach Fig. 3 schließt sich als dritter Unterblock die alternative Verarbeitung (26) an. Hier wird geprüft, ob der Merker A_ALT mit dem Wert "R" besetzt ist, d. h. ob bei einer möglicherweise vorhergegangenen Schiefstellung eine Regelabweichung auf der rechten Seite vorlag. Sollte dies nicht der Fall sein, so wird der Zähler Z = 0 gesetzt [vgl. (28) von Fig. 3]; sollte dies dagegen der Fall sein, so bedeutet dies, daß dem gegenwärtig vorliegenden Regelspiel "links" mit Schiefstellung ein entgegengesetztes Regelspiel, nämlich ein Regelspiel "rechts" mit Schiefstellung vorausgegangen war: Der Inhalt des Zählers Z wird um 1 erhöht [vgl. (29) von Fig. 3].

Mit dieser Logik ist im Zähler Z immer diejenige Anzahl von direkt aufeinanderfolgenden entgegengesetzten Regelspielen gespeichert.

Mit dem Abschluß der alternativen Verarbeitung (26) ist die Verarbeitung des Blocks (22) abgeschlossen. Sowohl an Block (22) wie an Block (23) schließt sich gemeinsam Block (30) an, in dem der Inhalt des Merkers A_NEU in den Merker A_ALT übernommen wird. Für eine möglicherweise noch nachfolgende weitere Schiefstellung ist damit festgehalten, auf welcher Seite eine vorhergehende Schiefstellung stattgefunden hat.

In der anschließenden alternativen Verarbeitung (32) wird geprüft, ob der Zählerstand größer ist als die Konstante N. Ist dies nicht der Fall, so wird die Ausführung des Blocks (21) nach Fig. 3 beendet, sollte dies der Fall sein, so wird der Block (33) durchgeführt.

In dem ersten Unterblock (34) zu Block (33) werden die vorliegenden Höhen-Istwerte "links" X_{IL} und "rechts" X_{IR} eingelesen. In dem darauffolgenden Unterblock (35) von Block (33) wird statt des Sollwert-Toleranzbandes nach Fig. 2a ein temporäres Ersatz-Toleranzband nach Fig. 2b gebildet, und es wird auf dieses temporäre Ersatz-Toleranzband umgeschaltet. Als Basis für das temporäre Ersatz-Toleranzband wird die Fahrzeug-Schiefstellung zugrundegelegt, wie sie sich im Rahmen der vorhergegangenen mehr als N entgegengesetzten Regelspielen eingestellt hat.

Fig. 2b zeigt dieses temporäre Ersatz-Toleranzband. Um den vorliegenden Höhen-Istwert "links" X_{IL} und den Höhen-Istwert "rechts" X_{IR} ist ein Toleranzband mit der Höhe 2T gelegt. Durch die Einschaltung dieses Toleranzbandes wird zweierlei bewirkt: Es ist erstens sichergestellt, daß keine Regelabweichung mehr besteht, da das Toleranzband um die bestehenden Istwerte angelegt ist und zweitens wird die Schiefstellung, so wie sie sich bei den mehr als N Geradestellungsversuchen ergeben hat, bis auf weiteres beibehalten.

Als letzter Unterblock des Blocks (33) wird der Unterblock (36) durchlaufen. In dem Luftfederbalg mit dem größeren Höhen-Istwert wird ein Druckpuls von definierter Größe eingespeist [bei dem Beispiel eines temporären Ersatz-Toleranzbandes nach Fig. 2b ist dies der Luftfederbalg "links", d. h. Luftfederbalg (1) nach Fig. 1.]. Der Luftfederbalg mit dem größeren Höhen-Istwert ist nämlich derjenige, der im Vergleich zu dem Luftfederbalg mit dem niedrigeren Höhen-Istwert das geringere Druckniveau aufweist. Der Druckpuls ist größenmäßig so bemessen, daß er einerseits ein ausreichendes Druckniveau in dem betreffenden Luftfederbalg sicherstellt, andererseits jedoch klein genug ist, damit die Druckveränderung in diesem Luftfederbalg den Höhen-Istwert nur so geringfügig verändert, daß das temporäre Ersatz-Toleranzband nicht überschritten wird.

Ein für einen Luftfederbalg ausreichendes Mindest-Druckniveau besteht z. B. aus einem Druck von 0,2 bar, bei dem noch keine Schädigung des Luftfederbalges auftritt. Ist der Luftfederbalg dagegen vollständig entlüftet, und es herrscht in ihm der Druck der Atmosphäre, so kann es zum Knittern und damit zu einer Schädigung kommen. In diesem Fall entsteht im Luftfederbalg beim Ausfedern (abgeschlossenes Volumen) ein Unterdruck, und der den Luftfederbalg umgebende Druck der Atmosphäre bewirkt möglicherweise ein Knittern des Luftfederbalges.

Mit den vorstehenden Erläuterungen ist ein gesamter Durchlauf des Blocks (21) beschrieben. Der Vollständigkeit halber wird hinzugefügt, daß die erläuterten Vorgänge des Blocks (22) für die Regelabweichung bei Schiefstellung "links" in sinngemäß gleicher Weise auf den Block (23), nämlich auf den Fall einer Regelabweichung bei Schiefstellung "rechts", anzuwenden sind. Im ersten Unterblock (31) zu Block (23) wird dem Merker A_NEU der Wert "R" zugewiesen, in den weiteren Unterblöcken des Blocks (23) erfolgen die Vorgänge für Luftfederbalg (2) "rechts" in genau gleicher Weise, wie sie in den Unterblöcken zu Block (22) erläutert worden sind.

Wie vorstehend erläutert, kommt es bei einer Fahrzeugachsen-Schiefstellung möglicherweise zu einer Reihe von direkt aufeinanderfolgenden entgegengesetzten Regelspielen. Bei jedem der entgegengesetzten Regelspiele wird der Druck im Luftfederbalg auf der Seite, auf der qua Regelung der Höhen-Istwert in das Sollwert-Toleranzband zurückgeführt wird, verändert. Wenn diese Seite diejenige ist, auf deren Luftfederbalg eine Kraftkomponente einwirkt, welche die größere von den beiden, verursacht durch die asymmetrische Beladung unterschiedlichen, auf beide Luftfederbälge einwirkenden Kraftkomponenten ist, so wird der Druck im Luftfederbalg erhöht; sollte es dagegen diejenige Seite sein, auf deren Luftfederbalg die kleinere von den beiden Kraftkomponenten einwirkt, so wird der Druck im Luftfederbalg verringert. (Dieses Verhalten in einem Regelspiel ist analog zu dem eingangs erwähnten Gesamtverhalten der bekannten Niveauregeleinrichtung entsprechend der eingangs genannten Veröffentlichung, mit dem Unterschied, daß sich die Wirkung nur auf dieses Regelspiel, nicht aber auf das Gesamtverhalten auswirkt). Im Ergebnis wird daher mit jedem entgegengesetzten Regelspiel die Druckdifferenz zwischen beiden Luftfederbälgen erhöht. Mit der Begrenzung der Anzahl von entgegengesetzten Regelspielen wird einerseits unter den gegebenen Bedingungen nach Möglichkeit eine Geradestellung der Fahrzeugachse herbeigeführt, aber andererseits verhindert, daß ein maximaler Druckunterschied zwischen den Luftfederbälgen dadurch überschritten wird, weil zu viele entgegengesetzte Regelspiele durchgeführt werden.

Für eine bestimmte Anwendung gibt man einen maximalen Druckunterschied vor und ermittelt dann empirisch die Anzahl von entgegengesetzten Regelspielen, die man zulassen kann, um diesen maximalen Druckunterschied nicht zu überschreiten. Diese empirisch ermittelte Anzahl wird als Konstante N nach Fig. 3 vorgegeben.

Wenn bei einer Fahrzeugachsen-Schiefstellung eine Geradestellung der Fahrzeugachse mit maximal N entgegengesetzten Regelspielen erreicht, und damit auch ein maximaler Druckunterschied zwischen den Luftfederbälgen nicht überschritten wird, so ist auch sichergestellt, daß ein erforderliches Mindest-Druckniveau in dem Luftfederbalg, auf den die geringere Kraftkomponente einwirkt, einhalt-bar ist. Die Einrichtung läßt sich deshalb auch mit dem Ziel eines ausreichenden Mindest-Druckniveaus dimensionieren. In diesem Falle ermittelt man analog zum oben dargestellten Verfahren empirisch die Anzahl von entgegengesetzten Regelspielen, die möglich sind, damit ein für die Anwendung vorgegebenes Mindest-Druckniveau auf jeden Fall nicht unterschritten wird, und man legt diesen Wert als Konstante N fest.

Zusammenfassend wurde dargelegt, daß bei einer Regelabweichung mit Schiefstellung durch eine vorgegebene Anzahl von entgegengesetzten Regelspielen versucht wird, eine Geradestellung zu erreichen. Wird im Rahmen dieser Regelspiele die Geradestellung erreicht, so ist auch sichergestellt, daß in den Luftfederbälgen kein zu großer Druckunterschied vorherrscht bzw. ein ausreichendes Druckniveau gegeben ist. Überschreitet dagegen die Anzahl der Regelspiele die vorgegebene Anzahl, so wird die sich daraus ergebende Fahrzeug-Schiefstellung temporär als neuer Sollwert zugrundegelegt, und es wird zusätzlich sichergestellt, daß in beiden Luftfederbälgen ein ausreichendes Druckniveau herrscht.

Bei jeder Abweichung eines Höhen-Istwertes aus einem Toleranzband - sei es das eingespeicherte Sollwert-Toleranzband oder das aufgrund einer sehr hohen Schiefstellung eingenommene Ersatz-Toleranzband - wird zunächst versucht, eine Geradestellung der Fahrzeugachse auf der Basis des Sollwert-Toleranzbandes nach Fig. 2a herbeizuführen. Erst wenn sich aufgrund mehrfacher Prüfung zeigt, daß dies nicht möglich ist, so wird ein Ersatz-Toleranzband nach Fig. 2b gebildet und die Fahrzeugachse bleibt entsprechend diesem Ersatz-Toleranzband ausgerichtet.

Im beschriebenen Ausführungsbeispiel wird die Prüfung, ob die Geradestellung einer Fahrzeugachse bei ausreichendem Druckniveau möglich ist, durch das in Fig. 3 dargestellte Programmteil durchgeführt, welches im Elektronik-Regler (15) nach Fig. 1 implementiert ist. Die Prüfeinrichtung stellt also einen Teil des Elektronik-Reglers (15) dar.

### Bezugszeichenliste

| | | |
|---|---|---|
| ( 1) | Luftfederbalg an Achse links | Fig. 1 |
| ( 2) | Luftfederbalg an Achse rechts | Fig. 1 |
| ( 3) | Stellventil Luftfederbalg (1), Belüftungs/Entlüftungsventil | Fig. 1 |
| ( 4) | Stellventil Luftfederbalg (2), Belüftungs/Entlüftungsventil | Fig. 1 |
| ( 5) | Gemeinsames Richtungsventil | Fig. 1 |
| (6) | Luftvorrat | Fig. 1 |
| ( 7) | Entlüftung Richtungsventil (5) | Fig. 1 |
| ( 8) | Leitung zu Stellventilen (3,4) | Fig. 1 |
| ( 9) | Leitung Stellventil (3) zu Luftfederbalg (1) | Fig. 1 |
| (10) | Leitung Stellventil (4) zu Luftfederbalg (2) | Fig. 1 |
| (11) | Höhensensor Luftfederbalg (1) | Fig. 1 |
| (12) | Höhensensor Luftfederbalg (2) | Fig. 1 |
| (13) | Erster Eingang Elektronik-Regler (15) | Fig. 1 |
| (14) | Zweiter Eingang Elektronik-Regler (15) | Fig. 1 |
| (15) | Elektronik-Regler | Fig. 1 |
| (16) | Erster Ausgang Elektronik-Regler (15) | Fig. 1 |
| (17) | Zweiter Ausgang Elektronik-Regler (15) | Fig. 1 |
| (18) | Dritter Ausgang Elektronik-Regler (15) | Fig. 1 |
| | | |
| (20) | Verarbeitungsblock Initialisierung | Fig. 3 |
| (21) | Verarbeitungsblock bei Schiefstellung in wiederholter Ausführung | Fig. 3 |
| (22) | Block Schiefstellung "links" | Fig. 3 |
| (23) | Block Schiefstellung "rechts" | Fig. 3 |
| (24) | Unterblock Zuweisung Merker A_NEU | Fig. 3 |
| (25) | Unterblock Druckveränderung bei Regelabweichung "links" | Fig. 3 |
| (26) | Unterblock alternative Verarbeitung aufgrund des Inhaltes von Merker A_ALT | Fig. 3 |
| (28) | Reset Zähler Z | Fig. 3 |
| (29) | Inkrementierung Zähler Z | Fig. 3 |
| (30) | Übernahme Merkerinhalt A_NEU in A_ALT für weitere Durchläufe | Fig. 3 |
| (31) | Unterblock Zuweisung Merker A_NEU | Fig. 3 |
| (32) | Alternative Verarbeitung in Abhängigkeit von dem Inhalt des Zählers Z | Fig. 3 |
| (33) | Block bei Überschreitung des Grenzwertes N | Fig. 3 |
| (34) | Unterblock Einlesen Höhen-Istwerte | Fig. 3 |
| (35) | Unterblock Bildung und Einschaltung Ersatz-Toleranzband | Fig. 3 |
| (36) | Unterblock Einspeisung Druckpuls | Fig. 3 |

## Patentansprüche

1. Mit Druckmittel arbeitende Niveauregeleinrichtung mit folgenden Merkmalen:
a) es sind Druckmittelkammern (1, 2) vorgesehen, die einen Fahrzeugaufbau tragen;
b) es ist eine Ventileinrichtung (3, 4, 5) vorgesehen, die mit den Druckmittelkammern (1, 2) verbunden ist;
c) die Ventileinrichtung (3, 4, 5) ist mit einer Druckmittelquelle (6) oder mit einer Druckmittelsenke (7) verbindbar und dient zur Druckveränderung in den Druckmittelkammern (1, 2);
d) es sind Sensoren (11, 12) vorgesehen, welche Ist-Abstände zwischen Fahrzeugachsen und dem Fahrzeugaufbau ermitteln;
e) es ist eine Regeleinrichtung (15) vorgesehen, der frei wählbare Soll-Abstände zwischen den Fahrzeugachsen und dem Fahrzeugaufbau vorgebbar sind und die die Ventileinrichtung in Abhängigkeit von der Regelabweichung, nämlich den Differenzen zwischen den entsprechenden Soll- und Ist-Abständen steuert;
f) durch Druckveränderungen bzw. durch Veränderung der Druckmittelmengen in den Druckmittelkammern (1, 2) werden die Ist-Abstände gleich den Soll-Abständen;
g) einer Fahrzeugachse sind je 2 Druckmittelkammern (1, 2) und je 2 Sensoren (11, 12) zugeordnet;
h) es ist eine Prüfeinrichtung als Teil der Regeleinrichtung (15) vorgesehen, die feststellt, ob eine Geradestellung bei Einhaltung einer Bedingung möglich ist, wobei das Ergebnis der Prüfung entweder bei Einhaltung der Bedingung positiv, oder bei bei Nichteinhaltung der Bedingung negativ ist;
i) die Bedingung besteht entweder darin, daß die Geradestellung einer Fahrzeugachse bei einem vorgegebenen maximalen Druckunterschied zwischen den Druckmittelkammern möglich ist, oder die Bedingung besteht darin, daß die Geradestellung einer Fahrzeugachse bei einem in beiden Druckmittelkammern vorgegebenen Mindest-Druckniveau möglich ist;
k) die Prüfung besteht aus dem Versuch der Regeleinrichtung (15), für eine Fahrzeugachse, die Ist-Abstände entsprechend den Soll-Abständen einzustellen;
l) bei erfolgter Einstellung der Ist-Abstände ist die Prüfung mit positivem Ergebnis beendet;
gekennzeichnet durch die folgenden Merkmale:
m) bei nicht erfolgter Einstellung der Ist-Abstände sind erneute Versuche der Regeleinrichtung (15) für die Fahrzeugachse in entgegengesetzten Regelspielen vorgesehen, die Ist-Abstände entsprechend den Soll-Abständen einzustellen;
n) bei Unterschreitung einer festgelegten Zahl durch die Anzahl der entgegengesetzten Regelspiele oder bei Gleichheit der festgelegten Zahl mit der Anzahl der entgegengesetzten Regelspiele ist die Prüfung mit positivem Ergebnis beendet;
o) bei Überschreitung der festgelegten Zahl durch die Anzahl der entgegengesetzten Regelspiele ist die Prüfung mit negativem Ergebnis beendet;
p) bei negativem Ergebnis der Prüfung sind für die betreffende Fahrzeugachse neue Soll-Abstände festgelegt und die Durchführung der Regelung erfolgt nach den neuen Soll-Abständen.

2. Einrichtung nach Anspruch 1, dadurch gekennzeichnet, daß die neuen Soll-Abstände aus der sich im Rahmen der Prüfung ergebenden Fahrzeugachsen-Schiefstellung ermittelt sind.

3. Einrichtung nach Anspruch 2, dadurch gekennzeichnet, daß die sich bei der Prüfung ergebenden und eingelesen Ist-Abstände gleich den neuen Soll-Abständen gesetzt sind.

4. Einrichtung nach einem der Ansprüche 1 bis 3, dadurch gekennzeichnet, daß zum Abschluß eines Regelvorgangs in die Druckmittelkammer auf der Seite mit dem höheren Ist-Abstand ein Druckpuls eingespeist ist, der klein genug ist, um sicherzustellen, daß es an dieser Stelle zu keiner das vorliegende Toleranzband überschreitenden Abstands-Veränderung kommt, der aber groß genug ist, um in dieser Druckmittelkammer das erforderliche Mindest-Druckniveau sicherzustellen.

## Claims

1. Level control device operating with pressure medium, having the following features:
a) pressure medium chambers (1, 2), which carry a vehicle superstructure, are provided;
b) a valve device (3, 4, 5), which is connected to the pressure medium chambers (1, 2), is provided;
c) the valve device (3, 4, 5) is arranged to be connected to a pressure medium source (6) or to a pressure medium sink (7) and serves for changing the pressure in the pressure medium chambers (1, 2);
d) sensors (11, 12), which detect instantaneous spacings between vehicle axles and the vehicle superstructure, are provided;
e) a control device (15) is provided, which is arranged to be preset with freely selectable desired spacings between the vehicle axles and the vehicle superstructure and which controls the valve device in dependence upon the control error, namely the differences between the corresponding desired spacings and instantaneous spacings;
f) the instantaneous spacings become equal to the desired spacings as a result of changes in pressure or as a result of a change in the amounts of pressure medium in the pressure medium chambers (1, 2);
g) with each vehicle axle there are associated 2 pressure medium chambers (1, 2) and 2 sensors (11, 12);
h) there is provided, as part of the control device (15), a testing device which ascertains whether straightening is possible while meeting a condition, the result of the testing being either positive if the condition is met or negative if the condition is not met;
i) either the condition is that straightening of a vehicle axle is possible with a prespecified maximum pressure difference between the pressure medium chambers or the condition is that straightening of a vehicle axle is possible with a prespecified minimum pressure level in both pressure medium chambers;
k) the testing consists of the attempt by the control device (15) to adjust the instantaneous spacings in accordance with the desired spacings for a vehicle axle;
l) if adjustment of the instantaneous spacings is accomplished, the testing is terminated with a positive result;
characterised by the following features:
m) if adjustment of the instantaneous spacings is not accomplished, provision is made for the control device (15) for the vehicle axle to make renewed attempts, in opposite control cycles, to adjust the instantaneous spacings in accordance with the desired spacings;
n) if the number of opposite control cycles is less than a specified number or if the specified number and the number of opposite control cycles are the same, the testing is terminated with a positive result;
o) if the number of opposite control cycles exceeds the specified number, the testing is terminated with a negative result;
p) if the result of the testing is negative, new desired spacings are specified for the vehicle axle in question and the control is carried out according to the new desired spacings.

2. Device according to claim 1, characterised in that the new desired spacings are determined from the vehicle axle slanting position that comes about in the course of the testing.

3. Device according to claim 2, characterised in that the instantaneous spacings that come about and are read in during the testing are set as the new desired spacings.

4. Device according to any one of claims 1 to 3, characterised in that, at the end of a control procedure, the pressure medium chamber on the side having the higher instantaneous spacing is supplied with a pressure pulse which is small enough to ensure that no spacing change that exceeds the prevailing tolerance band comes about in that position but which is large enough to ensure the requisite minimum pressure level in that pressure medium chamber.

## Revendications

1. Dispositif de régulation de niveau travaillant avec un fluide sous pression, présentant les caractéristiques suivantes :
a) il est prévu des chambres (1,2) contenant le fluide sous pression et qui supportent une caisse de véhicule;
b) il est prévu un dispositif à soupapes (3,4,5), qui est relié aux chambres (1,2) contenant le fluide sous pression;
c) le dispositif à soupapes (3,4,5) peut être relié à une source de fluide sous pression (6) ou à un récepteur (7) de fluide sous pression et sert à modifier la pression dans les chambres (1,2) contenant le fluide sous pression;
d) il est prévu des capteurs (11,12), qui déterminent des distances réelles entre les essieux du véhicule et la caisse du véhicule;
e) il est prévu un dispositif de régulation (15), dans lequel des distances de consigne pouvant être librement choisies entre les essieux du véhicule et la caisse du véhicule peuvent être prédéterminées et qui commande le dispositif à soupapes en fonction de l'écart de régulation, c'est-à-dire de la différence entre les distances de consigne et les distances réelles correspondantes;
f) les distances réelles sont rendues égales aux distances de consigne au moyen de changements de pression ou au moyen d'une variation des quantités de fluide sous pression dans les chambres (1, 2) contenant le fluide sous pression ;
g) respectivement 2 chambres (1, 2) contenant le fluide sous pression et respectivement 2 capteurs (11,12) sont associés à un essieu du véhicule;
h) il est prévu en tant que partie du dispositif de régulation (15) un dispositif de contrôle qui détermine si une position horizontale est possible tout en respectant une condition, le résultat du contrôle étant soit positif dans le cas du respect de la condition, soit négatif dans le cas du non-respect de la condition;
i) la condition consistant en ce que la position horizontale de l'essieu du véhicule est possible pour une différence maximale prédéterminée de pression entre les chambres contenant le fluide sous pression ou la condition consiste en ce que la position horizontale d'un essieu du véhicule est possible dans le cas d'un niveau de pression minimum prédéterminé dans les deux chambres contenant le fluide sous pression;
k) le contrôle consiste en ce que le dispositif de régulation (15) essaie de régler, pour un essieu du véhicule, les distances réelles conformément aux distances de consigne;
l) lorsque le réglage des distances réelles est effectué, le contrôle est terminé avec un résultat positif;
caractérisé par les caractéristiques suivantes :
m) lorsque le réglage des distances réelles n'est pas exécuté, de nouvelles tentatives sont prévues de la part du dispositif de régulation (15) pour l'essieu du véhicule dans des cycles de régulation opposés, pour régler les distances réelles en fonction des distances de consigne;
n) dans le cas où le nombre des cycles de régulation opposés tombe au-dessous d'un nombre fixé ou bien dans le cas d'égalités entre le nombre fixé et le nombre des cycles de régulation opposés, le contrôle est terminé avec un résultat positif;
o) dans le cas où le nombre des cycles de régulation opposés dépasse le nombre fixé, le contrôle est terminé avec un résultat négatif;
p) lorsque le contrôle fournit un résultat négatif, de nouvelles distances de consigne sont fixées pour l'essieu correspondant du véhicule et l'exécution de la régulation s'effectue sur la base des nouvelles distances de consigne.

2. Dispositif selon la revendication 1, caractérisé en ce que les nouvelles distances de consigne sont déterminées à partir de la position inclinée de l'essieu du véhicule, qui est obtenue dans le cadre du contrôle.

3. Dispositif selon la revendication 2, caractérisé en ce que les distances réelles, qui sont obtenues et lues lors du contrôle sont réglées égales aux nouvelles distances de consigne.

4. Dispositif selon l'une des revendications 1 à 3, caractérisé en ce que pour l'achèvement d'un cycle de régulation, dans la chambre contenant le fluide sous pression située du côté présentant la distance réelle la plus grande est injectée une impulsion de pression qui est suffisamment faible pour garantir qu'en cet endroit, il ne se produit aucune modification de distance, qui dépasse la plage existante de tolérance, mais qui est suffisamment grande pour garantir, dans cette chambre contenant le fluide sous pression, le niveau de pression minimum nécessaire.
